# EUROPÄISCHE PATENTSCHRIFT

(11) **EP 0 576 515 B1**
(45) Veröffentlichungstag und Bekanntmachung des Hinweises auf die Patenterteilung: **04.02.1998**
(21) Anmeldenummer: 92906882.3
(22) Anmeldetag: 17.03.1992
(51) Int. Cl.: A23L 1/025, A23L 1/211, B01J 19/10, A23K 1/14

(54) **DEKONTAMINATION UND DETOXIFIKATION VON GETREIDE, WELCHES MIT MYKOTOXINEN BELASTET IST**
DECONTAMINATION AND DETOXICATION OF CEREALS CONTAMINATED BY MYCOTOXINS
DECONTAMINATION ET DETOXICATION DE CEREALES CONTAMINEES PAR DES MYCOTOXINES

(30) Priorität: 18.03.1991 DE 4108746
(43) Veröffentlichungstag der Anmeldung: 05.01.1994
(73) Patentinhaber: Lindner, Wolfgang, Prof. Dr., A-8046 Graz (AT)
(72) Erfinder: Lindner, Wolfgang, Prof. Dr., A-8046 Graz (AT)
(74) Vertreter: Morgan, James Garnet
(86) Internationale Anmeldenummer: EP9200579
(87) Internationale Veröffentlichungsnummer: WO9216116

(56) Entgegenhaltungen:
- AT-B- 387 693
- DE-A- 1 914 095
- DE-A- 4 019 996
- GB-A- 1 554 040
- US-A- 4 477 357

## Beschreibung

Die vorliegende Erfindung betrifft ein Verfahren zur Dekontamination und Detoxifikation von mit Mykotoxinen belasteten Getreide und/oder anderen als Nahrungs- und/oder Futtermittel dienenden Samen sowie von mit Mykotoxinen belasteten chemischen Substanzen bzw. Nährstoffen und/oder Getreide oder andere Samen enthaltenden Flüssigkeiten. Insbesondere befaßt sich die Erfindung mit der Dekontamination bzw. Detoxifikation von Getreide oder anderen als Nahrungs- und/oder Futtermittel dienenden Samen wie Reis, Buchweizen, Hülsenfrüchte, Müsse oder dgl. und von Getreide, im besonderen Mais, Weizen, Hafer, Gerste, Roggen, welches bzw. welche mit Mykotoxinen, wie z.B. Aflatoxine, Zeralenone oder Ochratoxine, insbesondere mit tetracyklishen Trichothecen-Mykotoxinen der allgemeinen Grundformel, 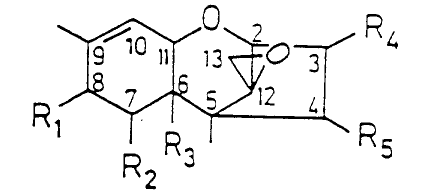 wobei durch Substitutionsvarianten der Rest R1 bis R5 die verschiedenen Trichothecen-Mykotoxine, wie z.B. T-2 Toxin (T-2), HT-2 Toxin (HT-2), Diacetoxyscirpenol (DAS), Monoacetoxyscirpenol, Neosolanin- Nivalenol (NIV), Deoxynivalenol (DON), 3-Acetyldeoxynivalenol (3-AcDON), T-2 Tetraol, Scirpentriol, Fusarenon, Crotocin, Satratoxin H etc., zu beschreiben sind, belastet ist bzw. sind.

Aflatoxine, Zeralenone und Ochratoxine haben ganz unterschiedliche chemische Strukturen gegenüber den Trichothecenen, gemeinsam ist ihnen aber ein Ester- bzw. Lakton-Struktur-Element im Molekül, welches reaktiv ist und z.B. mit Verbindung mit einer primären oder sekundären Aminfunktion zu entsprechenden Amiden reagieren kann.

Trichothecene sind sesquiterpenoide Verbindungen mit einer C12,C13-Spiroepoxy-Gruppierung, welche von Pilzen wie Fusarium, Trichoderma, Myrothecium, Staehybotrys und anderen produziert werden. Reis und verschiedene Getreidearten, im besonderen Mais, Weizen, Hafer, Gerste und Roggen, werden je nach Sortenwahl, klimatischen Gegebenheiten und Bodenbeschaffenheit von diesen Pilzen befallen und auf diese Weise mit sekundären Stoffwechselprodukten, den Mykotoxinen, wie z.B. vom Trichothecen-Typus, kontaminiert. Diese Mykotoxine rufen verschiedenartige Trichothecen-Toxikosen, sowohl bei Tieren, wenn das befallene Getreide als Futtermittel eingesetzt wird, als auch beim Menschen hervor.

Die verschiedenen Trichothecene wirken in unterschiedlichen Konzentrationen zellschädigend, neurotoxisch, dermatoxisch und führen zu Futterverweigerung, Erbrechen und Diarrhoe. Speziell über Futtermittel bzw. Futtermittelgetreide, das auch eine geringe Mykotoxinbelastung aufweist, können über einem längeren Zeitraum trotzdem relativ große Mengen an Mykotoxinen den Tieren verabreicht werden, was oft zu schweren Schädigungen führt (vgl. "Mycotoxins in Food", P. Krogh Edt., Academic Press, New York, 1987). Die Trichothecene liefernden Pilze befallen im allgemeinen das Getreide schon am Feld, doch können sie auch bei unsachgemäßer Lagerung des Getreides (z.B. kühl und feucht) weiterhin aktiv bleiben. Die Lagerungsbedingungen kann man eventuell steuern, nicht hingegen den Feldbefall, da dieser auch stark von den klimatischen Bedingungen abhängt.

Ein mit Mykotoxinen stark kontaminiertes Erntegut ist kaum noch zu verwenden und führt zu großen wirtschaftlichen Schäden. Im besonderen gilt dies auch für Mais und Weizen, welche in großen Mengen in der Futtermittelindustrie eingesetzt werden. Wie Untersuchungen zeigen (Hart und Braselton, J. Agric. Food Chem. 31, 657 (1983)), kommt es beim Trockenmahl-Vorgang von Weizen, der z.B. mit DON kontaminiert war, wohl zu einer partiellen Trennung von DON-reicheren und DON-ärmeren Mehlen und Schroten, doch bleibt jedenfalls DON im Endprodukt. Gleiches gilt auch für Maisprodukte.

Trichothecene sind chemisch relativ stabil, im besonderen die toxophore Gruppe, das 12,13-Epoxid. So zersetzt sich z.B. das Deoxynivalenol (DON) auch bei Koch-, Brat- und Backbedingungen wie auch beim Autoklavieren und bei Dampfbehandlungen (Toasten, Pelletieren, Extrudieren) kaum und bleibt somit auch in einem aufbereiteten Futter- oder Nahrungsmittel bestehen. Das heißt, es gelingt dieserart keine Detoxifikation (vgl. A.El-Banna et al., J. of Food Protection 46 (6) (1983)). Trichothecene, die eine Estergruppe enthalten, werden in alkalischem Milieu in die entsprechenden Alkohole umgewandelt, doch die Toxizität der solcherart erhaltenen Abbauprodukte ist zumeist hoch und erfährt über diesen Abbauweg kaum eine Verminderung (vgl. "Mycotoxins in Food" und Zitate darin).

Da in den letzten Jahren erst in vollem Maße erkannt wurde, daß speziell DON und auch 3-AcDON in bisher unbekannt hohen Konzentrationen auf Mais und anderen Getreiden auftritt, kommt der Untersuchung der Produkte hinsichtlich des DON-Gehaltes vermehrte Bedeutung zu und die gesetzgebenden Behörden in den verschiedenen Ländern beginnen darauf zu reagieren. Noch gibt es keine bindende Höchstmengen-Verordnungen für Trichothecen Mykotoxin Gehalte. Doch basierend auf toxikologischen Daten (vgl. "Mycotoxins in Food", Kapitel 6 "Trichothecenes in Food") wird empfohlen, daß z.B. die Werte für DON 2ppm (1ppm) und die für Nivalenol 0,2 ppm nicht überschritten werden sollten. Da Kleinkinder und Kinder wesentlich empfindlicher auf Mykotoxine reagieren, ist für Kindernahrung die Grenze wesentlich tiefer anzusetzen. Gleiches gilt für Futtermittel, die bei Jungtieren zum Einsatz kommen, wobei hier auch die Langzeitfuttermittelaufnahme zu beachten ist. Inwieweit die Trichothecene eine Wirkungssteigerung durch andere Mykotoxine, oder vice versa, erfahren, ist noch weitgehend ungeklärt, doch wird man sich des eventuell potenzierten Gesundheitsrisikos bewußter.

Aus oben angeführten Gründen kommt der Entwicklung von Verfahren zur Reduzierung des Mykotoxingehalts auf Getreiden und in der Folge Getreideprodukten erhöhte Bedeutung zu.

Auf Grund der hohen Toxizität von Mykotoxinen vom Aflatoxin Typ, welche Stoffwechselprodukte von Lagerpilzen (z.B. Aspergillus Arten) darstellen, sind zunächst die Methodenentwicklung zur Entgiftung von Aflatoxin-haltigen Produkten, wie z.B. dem Erdnußschrot, Mais und anderen Getreiden im Vordergrund. Basierend auf der chemischen Struktur von Aflatoxinen (enthalten einen Laktonring) erwiesen sich schlußendlich Verfahren, die eine Behandlung des Gutes mit einem Amin (z.B. Ammoniak oder Monomethylamin) in stark alkalischem Milieu (z.B. mit Ca(OH)2 oder NaOH) bei hoher Temperatur (z.B. 100°C) und unter Druck (z.B. 3 bis 10 Bar) über eine halbe bis mehrere Stunden als zielführend (vgl. I. Apelt, Die Mühle + Mischfuttertechnik, 126. Jahrgang, Heft 30, 435 (1989)). Diese stark alkalische Behandlung von Getreide bzw. Nußschrot mit Aminzusatz (Ammoniak bzw. Methylamin) und einer eventuellen weiteren Zuhilfenahme von Formaldehyd (Verfahren in Frankreich derzeit in Anwendung) ist der bisher einzig relativ sichere und gangbare Weg zur Detoxifikation von Aflatoxinen, Zeralenonen und Ochratoxinen.

Wie Arbeiten beschreiben, gelingt nun unter diesen Bedingungen auch die Detoxifikation von Fusarientoxinen, wie T-2 Toxin, Diacetoxyscirpenol und Zeralenon (vgl. J. Bauer et al., Tierärztl. Umschau 42, 70-77 (1987)). Im Rahmen eines Symposiums "Unerwünschte Stoff in Futtermittel, Mykotoxine in Getreide und Futtermittel - Maßnahme zur Beseitigung" Braunschweig 30./31.10.1990 (vgl. IFF/Informationsdienst Nr. 224/1990) wurde berichtet, daß bei der Alkali/Aminbehandlung von Getreiden unter Druck und bei 95°C neben dem Fusarientoxin Deoxynivalenol (DON) auch Zeralenon, Ochratoxin und Aflatoxin weitgehend beseitigt werden können.

Aus dem vorliegenden Stand der Technik ergibt sich, daß eine Detoxifikation der Mykotoxine, wie Aflatoxin B1, T-2 Toxin, Diacetoxyscirpenol, Deoxynivalenol und Zeralenon (einem ebenfalls relativ häufig vorkommenden Mykotoxin auf Getreide) sowie Ochratoxin (einem von Lagerpilzen produzierten Mykotoxin) weitgehend gelingt, wie Überprüfungen der Materialien nach physikalisch-chemischen wie auch biologischen Verfahren zeigen. Die Behandlungsbedingungen (stark alkalisch, Aminzugabe ev. Formaldehydzugabe, hohe Temperatur T > 90°C und Druck) sind chemisch gesehen jedoch als drastisch zu bewerten. Die Qualitätsbewertung der solcherart behandelten Getreide- und Futtermittelproben wurde nicht beschrieben, doch tritt nach eigener Erfahrung sicher eine teilweise Farb-, Geschmacks- und Qualitätsveränderung der Produkte ein.

In der DE 40 19 996 Al ist ein Verfahren zum Reinigen von Früchten und Gemüsen von Verunreinigungen wie Schlamm, biologischem Schmutz, mikrobiologischer Flora wie Schimmelpilze, Pilzen, Würmern, Bakterien, Keimen sowie von Chemikalien wie Pestiziden, Düngemittelrückständen und dergleichen von rauhen oder glatten Oberflächen von Früchten und Gemüsen aller Art beschrieben. Bei diesem Verfahren werden die zu reinigenden Früchte in einen mit Wasser gefüllten Tank eingebracht und darin einem Ultraschallschwingungsfeld ausgesetzt. Dabei kann dem Wasser ein Gemisch aus Reinigungs-, Flottier- und Desinfektionsmitteln zugefügt werden.

Dieses bekannte Verfahren dient dazu, in Küchen zu verarbeitende Früchte und Gemüse von den gewöhnlichen Verschmutzungen zu befreien, und soll das normalerweise von Hand oder mittels hydromechanischer Reinigungsvorrichtungen erfolgende Abwaschen ersetzen.

Die Dekontamination und Detoxifikation von Getreide oder anderen als Nahrungsmittel dienenden Samen wird dabei nicht angesprochen. Insbesondere ist dem in der DE 40 19 996 A1 beschriebenen Verfahren kein Hinweis darauf zu entnehmen, wie toxische Stoffwechselprodukte der Schimmelpilze, also insbesondere Mykotoxine, entgiftet und/oder von Früchten und Gemüsen entfernt werden können. Darüber hinaus ist auch die Behandlung von Getreide und/oder anderen als Nahrungsmittel dienenden Samen nicht erläutert.

In der DE 19 14 095 A1 ist ferner ein Verfahren zur Entgiftung von Aflatoxin enthaltenden, insbesondere öl- oder fetthaltigen Lebensmitteln, wie z.B. Nußkernen, oder Getreide bzw. Getreideprodukten beschrieben. Bei diesem Verfahren wird das gifthaltige Gut zunächst mit erwärmten Wasser oder Wasserdampf gewaschen bzw. besprüht und anschließend mit Wasser von Raumtemperatur oder darunter gespült. Das Waschen und Spülen erfolgt dabei auf einer Vibrationsrinne bzw. auf einem vibrierenden Sieb, wobei während des Waschvorganges das zu behandelnde Gut einer Ultraschalleinwirkung ausgesetzt wird, um das zu behandelnde Gut in Vibrationen zu versetzen und damit die Waschwirkung zu verbessern.

Das aus der DE 19 14 095 bekannte Verfahren beschreibt somit ebenfalls nur das Waschen von zu behandelndem Gut und insbesondere nicht die Detoxifikation, für die eine Zersetzung der Mykotoxine erforderlich ist.

Aufgabe der vorliegenden Erfindung ist es, ein Verfahren zur Detoxifikation von mit Mykotoxinen belasteten Getreide oder anderen als Nahrungs- und oder Futtermittel dienenden Samen sowie von mit Mykotoxinen belasteten chemischen Substanzen bzw. Nährstoffen und/oder Getreide oder anderen Samen enthaltenden Flüssigkeiten unter schonenden Bedingungen zu schaffen, wobei die entgifteten Getreideprodukte bzw. Behandlungsprodukte hinsichtlich ihres Aussehens, Geschmacks und Nährwertes wietestgehend unverändert sein sollen.

Zur Lösung dieser Aufgabe wird erfindungsgemäß ein Verfahren zur Dekontamination bzw. Detoxifikation von mit Mykotoxinen belastetem Getreide oder anderen mit Mykotoxinen belasteten als Nahrungs- und oder Futtermittel dienenden Samen sowie von mit Mykotoxinen belasteten chemischen Substanzen bzw. Nährstoffen und/oder Getreide oder anderen Samen enthaltenden Flüssigkeiten vorgesehen, bei dem diese mit Ultraschallenergie behandelt werden, wobei die Dekontamination und Detoxifikation durch Mikrokavitation bzw. durch "sono-chemisch" induzierte Reaktionen in wäßrigem Milieu erreicht wird.

Bei der Behandlung von Getreide oder anderen als Nahrungs- und/oder Futtermittel dienenden Samen, welches bzw. welche mit Mykotoxinen, insbesondere Fusarien-Mykotoxinen der Trichothecen-Reihe belastet ist bzw. sind, zeichnet sich das erfindungsgemäße Verfahren dadurch aus, daß die Samen oder das Getreide einer Ultraschall-Behandlung in wässrigem Milieu durch Aufschlämmen der Samen- oder Getreidekörner in einer wässrigen Behandlungsflüssigkeit unterzogen werden.

Überraschenderweise wurde nun gefunden, daß man durch Ultraschallbehandlung der Samen- und Getreidekörner, wie Reis, Mais, Weizen, Gerse, Hafer, Roggen, Nüsse, aber auch Schrote und Grieße derselben, in wässrigem Milieu, eine weitgehende Detoxifikation der Mykotoxine, insbesondere der Trichotheken-Mykotoxine der allgemeinen Formel I, 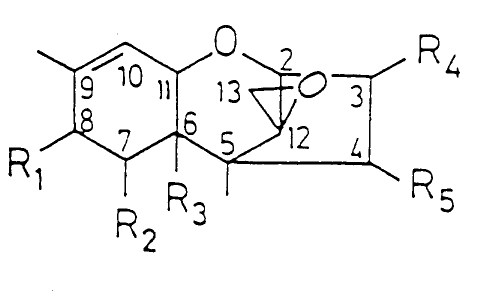 wobei R1 bis R5 im Anspruch 2 definiert und je nach dem Toxin zu spezifizierende Substituenten sind, erreicht. Es sind Anzeichen dafür gegeben, daß das Verfahren auch eine allgemeine Gültigkeit für die Dekontamination und/oder Detoxifikation von den verschiedenen Substanzen hat. Ferner sind Befunde gegeben, wonach das Verfahren auch für die Dekontamination und/oder Detoxifikation von Fusarien Mykotoxinen der Zeralenon-Reihe und der Ochratoxin-Reihe sowie von Aspergillus Mykotoxinen der Aflatoxin-Reihe Gültigkeit hat, wie in Anspruch 2 angegeben.

Das erfindungsgemäße Verfahren betrifft die zeitlich gepulste oder ungepulste Ultraschallbehandlung von 10 Sekunden bis 200 Minuten Dauer der Samen- oder Getreidekörnern oder -schroten, die in einer wäßrigen Suspension in einem Temperaturbereich zwischen 12° und 50°C vorliegen, wobei dem Wasser gegebenenfalls ein Alkohol, wie z.B. Methanol, Ethanol, Glycerin oder Polyethylenglykol als Benetzungs- und/oder Reaktionspartner und Reaktionsbeschleuniger zugegeben wird. Auch die Zugabe von geringen Mengen Alkalien, wie z.B. Ca(OH)2 oder NaHCO3 oder Na2CO3 zwischen 0,2 und 2 % bzw. Ammoniak oder Methylamin zwischen 0,1 und 0,5 %, oder Säuren (z.B. verdünnte Chlorwasserstoffsäure, Schwefelsäure, Phosphorsäure, Essigsäure oder Propionsäure) ist in manchen Fällen vorteilhaft.

Im Ultraschallbad, das heißt in der wässrigen Lösung, entstehen über die dort eingebrachten Ultraschallwellen Mikrocavitationen bzw. Cavitations-Bläschen. Dies sind Bereiche, in denen quasi Lösungsmittel-Impulsionen stattfinden, welche von örtlichen Druckwellen (bis zu 100kPa) begleitet sind, wobei in den Mikrocavitationszellen auch vorübergehend Temperaturen bis zu 1700°C auftreten können. Das Gesamtlösungsmittelbad erwärmt sich somit im Verlauf der Ultraschallbehandlung jedoch erst bei langer Beschallungsdauer auf Temperaturen über 70°C.

Mit dem physikalischen Phänomen der Mikrocavitations-Bläschen werden nun zwei verschiedene Prozesse ausgelöst. Einerseits kommt es durch die "Druckwellen" zu einer korrosionsartigen Stressung der Oberfläche von Partikeln, was mit der Ablösung von Oberflächenmaterialien verbunden ist. Dies wird z.B. bei der Reinigung von Geräten im Ultraschallbad ausgenützt, eine heutzutage verbreitete Technik für die Entkeimung von medizinischen Geräten. Da die Pilze, insbesondere Fusarienpilze, Aspergilluspilze oder Penizillinpilze, deren sekundäre Stoffwechselprodukte ja die Mykotoxine darstellen, bevorzugt an der Außenseite der Getreidekörner anhaften, gelingt nun mittels Ultraschallbehandlung eine weitgehende Ablösung der Pilze und Sporen und deren Dispersion in Lösung bzw. ein Inlösungbringen der Pilzstoffwechselprodukte bzw. der Mykotoxine.

Parallel zu diesem physikalischen Prozeß werden über die Ultraschallwellen bzw. den Mikrocavitationsprozessen chemische Prozesse "in Gang gebracht", die oft von den üblichen Reaktionswegen abweichen, und in das Spezialgebiet der sogenannten "Sono-Chemie" einzureihen sind (vgl. "Ultrasound in Synthesis", S.V. Ley und C.M. Low Edt., Springer Verlag, New York (1989)).

Im Fall der Trichothecene werden nun sichtlich chemische Reaktionen ausgelöst, welche zu einer Molekülveränderung der Toxine führt, wobei wahrscheinlich auch eine Reaktion am 12,13-Epoxid stattfindet und somit der toxophore Epoxidring zerstört wird. Aus der Chemie von Epoxiden weiß man, daß diese sowohl im Sauren als auch im Basischen, z.B. mit primären oder sekundären Aminkomponenten, zu reagieren vermögen. Als weitere Reaktionspartner können aber auch Alkohol-Gruppen oder Wasser, welche über radikalische Reaktionsmechanismen die bevorzugt sauer katalysiert sind, dienen. Die üblichen Reaktionsbedingungen hierfür sind immer Hitze und Druck bei relativ langer Reaktionszeit.

Ester bzw. Lactongruppen im Molekül, wie sie in den Zeralenonen, Ochratoxinen und Aflatoxinen vorkommen, sind befähigt, unter entsprechenden Bedingungen mit z.B. primären oder sekundären Aminen zu entsprechenden Amiden zu reagieren, womit eine drastische Molekülveränderung einhergeht.

Überraschenderweise kann man nun auch über die Ultraschallbadbehandlung von Lösungen derartige Reaktionen einleiten. Die bei der Ultraschallbehandlung von in Wasser aufgeschlämmten Samen- und Getreidekörnern sowie Getreideschroten in geringen Mengen jedoch rasch in wässrige Lösung gebrachten Getreideinhaltsstoffe fungieren nun ihrerseits als Reaktionspartner mit z.B. dem 12,13-Epoxid der verschiedenen Trichothecen Mykotoxine und bewirken dessen chemische Veränderung. Derart wird eine chemische Detoxifikation erreicht. Als bevorzugte "Sono Chemie" Reaktionstemperatur in wässrigem Milieu erweist sich der Temperaturbereich zwischen 20° und 50°C, wobei der Zusatz von protischen organischen Lösungsmitteln, bevorzugt Methanol oder Ethanol, oft reaktionsbeschleunigend wirkt.

Im gegenständlichen Verfahren dient der Lösungsmittelzusatz nicht nur der Reaktionsbeschleunigung, sondern auch der verbesserten Benetzbarkeit der Samen- und Getreideproben, um damit auch eine verbesserte Ablösung der toxinhaltigen Komponenten von der Probenoberfläche und deren Suspension bzw. Lösung im Wasser zu gewährleisten. Die Zugabe von Alkalien und/oder Aminen bzw. Säuren zur Ultraschallbad-Reaktionslösung wirkt ebenfalls beschleunigend bzw. kann notwendig werden, wenn die in Lösung gehenden Getreideinhaltsstoffe (was von Art zu Art variiert) nicht jene Zusammensetzung und Konzentration aufweisen, um eine Detoxifikationsreaktion zu gewährleisten. Nach erfolgter Ultraschallbehandlung der Samen, Getreide bzw. Getreideschrote wird verfahrensgemäß das Gut von der wässrigen Behandlungslösung separiert, nochmals mit Wasser (eventuell mit Ultraschall) gewaschen und anschließend getrocknet.

Der Ultraschall wirkt also als spezifische Energiequelle für die Einleitung chemischer Reaktionen und gleichzeitig als Reinigungsmethode zum Ablösen der Toxine von der Kernoberfläche des Getreides oder der Samen.

Ferner haben Untersuchungen gezeigt, daß insbesondere auch der Zeralenon-, Ochratoxin- und Aflatoxingehalt in Getreide um gut 70 bis 80 % mittels des erfindungsgemäßen Verfahrens verringert werden kann.

Das beschriebene Gesamtverfahren der Detoxifikation von Mykotoxinen, insbesondere von Fusarium-Mykotoxinen vom Trichothecen-Typ ist sehr schonend und sehr einfach. Es werden keine oder nur wenige lebensmittelverträgliche Hilfsreagenzien benötigt und die erhaltenen detoxifizierten Endprodukte sind in Aussehen, Geschmack und Qualität gleichwertig mit toxinarmen Samen, Getreiden bzw. Getreideprodukten.

Bevorzugte Vorrichtungen zur Durchführung des Verfahrens sind den Ansprüchen 9 und 10 zu entnehmen.

Der Vollständigkeit halber wird auf die GB-A-1 554 040 verwiesen, welche eine Vorrichtung zur Behandlung von fließfähigem Material beschreibt und insbesondere zum Dispergieren, Emulgieren, Auflösen, Mischen oder Zerkleinern des Materials gedacht ist. Zu diesem Zweck wird das Material mehrmals durch eine Behandlungszelle hindurch gepumpt, wobei diese Behandlungszelle zwei einandergegenüberliegende Wände aufweist, welche einen Abstand von 0.1 mm bis 25 mm haben und jeweils mehrere Ultraschallwandler tragen.

Die US-A-4 477 357 beschreibt ein Verfahren zur Entfernung von unerwünschten halogenierten aromatischen Verbindungen von einer Flüssigkeit oder von pervulenten Feststoffen, bei dem das Material in Anwesenheit von einem alkalischen Mittel mit Ultraschallstrahlung in einem Reaktionsgefäß behandelt wird, wobei die Menge des alkalischen Mittels in der Mischung mindestens so groß ist wie das Halogenäquivalent des Materials und die Ultraschallstrahlung Kavitation in der Mischung erzeugen soll.

Die folgenden Beispiele erlautern die Erfindung, ohne sie einzuschränken.

Die Erfindung wird nachfolgend anhand von Ausführungsbeispielen und Tabellen sowie anhand der Zeichnung näher erläutert, ohne sie einzuschränken. Es zeigen:
Tabelle 1 die experimentellen Ergebnisse bei der Detoxifikation von Maiskörnern,
Tabelle 2 den Zusammenhang zwischen Toxingehalt in Abhängigkeit von der Detoxifikationsdauer,
   - Fig. 1: eine schematische Darstellung einer Anlage mit mehreren hintereinander angeordneten Behandlungsstationen,
   - Fig. 2: eine schematische perspektivische Ansicht eines Behandlungskanals bzw. -rohres und
   - Fig. 3: einen schematischen Schnitt durch eine Behandlungsstation.

### Beispiel 1

Detoxifikation von Maiskörnern, welche mit Deoxynivalenol (DON) kontaminiert sind.

1kg trockene Maiskörner (Trocknungsgrad ca. 10% Restfeuchte) mit einer durchschnittlichen DON Kontamination von 400ppb (400 µg/kg) werden in einem Ultraschallbad mit einer Wassermenge von 2 Litern, der 100ml Ethanol beigegeben waren, unter kontinuierlichem Umwälzen der Körner während eines Zeitraumes von 90min ultrabeschallt, wobei eine Pulsfolge von 10min Schalldauer, 10min Pause, 10min Schalldauer usw. eingehalten wurde. Die Badtemperatur stieg dabei von anfänglich 20°C auf 40° bis 50°C und betrug im Mittel etwa 40°C. Nach Beendigung der Ultraschall-Behandlung wurden die Maiskörner von der Behandlungslösung abgesiebt, noch einmal mit H₂O gewaschen und getrocknet. Die detoxifizierten getrockneten Maiskörner wurden wie das Ausgangsmaterial hinsichtlich des DON-Gehaltes analysiert. Der Gehalt an DON betrug 30ppb, was einem Detoxifikationsgrad von ca. 92% entspricht.

Diese Versuchsanordnung wurde fünfmal mit ähnlich belastetem Mais wiederholt und es zeigte sich, daß der Detoxifikationsgrad in allen Fällen bei über 90% lag.

Als Ultraschallbad diente in allen Versuchsreihen (Beispiele 1 bis 7) ein Bad der Firma Elma mit einem Ultraschallschwinger der Frequenz 35kHz und einem 600W Generator.

Die DON-Analytik der Maisproben wurde nach einer, in unserem Labor in Anlehnung an die Methoden von R.Kostianinen et al. (Arch.Environ.Contom.Toxicol.18, 356-364 (1989)) und R.Black et al. (J.Chromatogr.338, 365-378 (1987)) ausgearbeiteten Methode und Zuhilfenahme von GC-ECD Analytik durchgeführt, wobei die Methode eine Nachweisgrenze von ca. 5ppb hat. Das Ergebnis wurde mittels GC-MS verifiziert.

### Beispiel 2

Detoxifikation von Maiskörnern, welche mit Deoxynivalenol (DON) T-2 Toxin (T-2), HT-2 Toxin (HT-2), Diacetoxyscirpenol (DAS), 3-Acetyldeoxynivalenol (3-AcDON) und Triol kontaminiert wurden.

Vier Proben von je 150g trockener Maiskörner (Grundbelastung 300ppb DON, 230ppb 3-AcDON, die anderen Trichothecen Toxine <5ppb ) wurden vor der Ultraschallbehandlung mit jeweils 500ppb je genannten Toxins dotiert. Die vier Maiskörnerproben wurden separat in je einem Glaskolben, der in ein Ultraschallbad gehängt wurde, mit 300ml Wasser, welches 20ml Methanol enthielt, unter ständigem Rühren aufgeschlämmt und über 90min zeitlich gepulst (10min Intervalle) ultrabeschallt. Die Badtemperatur betrug durchschnittlich 35°C. Nach 90min wurde die Ultraschallbehandlung (Dekontamination und Detoxifikation) abgebrochen. Von den Proben wurde nun nach Trennung der Körner von der Reaktionslösung, wobei kein Waschvorgang durchgeführt wurde, eine quantitative Trichothecen Analyse für die angegebenen Toxine, sowohl in den Körnern als auch in der Behandlungslösung, durchgeführt. Die Ergebnisse sind in Tabelle 1 zusammengefaßt.

### Tabelle 1

Aus den Ergebnissen geht hervor, daß ein Detoxifikationsprozess von Trichothecen Toxinen auf Getreide mit einfacher Ultraschallbehandlung zu erzielen ist. Die Dotierung der Lösung mit den verschiedenen Trichothecen Toxinen wurde bewußt extrem hoch gewählt, um den Gesamtwirkungsgrad zu verdeutlichen. Daß die Analyse des Maises Restgehalte an Toxinen aufweist, hat zwei Ursachen: a) Der trockene Mais (ca. 10% Feuchte) nimmt bei der Ultraschallbehandlung Wasser auf und erreicht nach Abtrennung der Lösung einen Feuchtegehalt von ca. 25%. Uber diesen Quellvorgang kommen eventuell kleine Mengen der sehr hohen Toxinmengen, welche in Lösung vorlagen, in das Korninnere und entziehen sich so der Detoxifikation, da die Ultraschallwellen kaum ins Korninnere gelangen, um dort eine sono-chemische Reaktion auszulösen.
b) Im gegenständlichen Versuch wurde kein Waschvorgang der Maiskörner nach Abtrennung von der Toxinlösung durchgeführt und so kann ein Restgehalt an-Toxinen am Maiskorn verbleiben. Ein Waschvorgang erweist sich aus diesem Befund als sinnvoll. Auch könnte die "Detoxifikationskraft" der alkoholischen Maisaufschlämmung langsam erschöpft werden, um einen Gesamttoxingehalt über 3000ppb quantitativ zu entgiften. Der Detoxifikationsgrad der verschiedenen Toxine am Mais und in der Lösung betrug zwischen 75% und 95%.

### Beispiel 3

Dekontamination und Detoxifikation von Maiskörnern, welche mit Deoxynivalenol (DON) belastet waren in Abhängigkeit von Ultraschall-Behandlungsdäuer.

1kg trockene Maiskörner, welche eine durchschnittliche Ausgangsbelastung von 600ppb DON aufwiesen, wurden in 2l Leitungswasser, das 50ml Ethanol enthielt, aufgeschlemmt und unter leichtem Umwälzen zeitgepulst ultrabeschallt (10min Ultraschall, 10min Pause, 10min Ultraschall usw.). Nach 5, 10, 30, 50, 70, 90, 110, 130 und 150min wurden Mais- und Ultraschallösungs-Proben gezogen, separat analysiert und die Werte in Tabelle 2 zusammengefaßt.

### Tabelle 2

Aus den Ergebnissen geht hervor, daß der Dekontaminationsprozeß von Trichothecen Toxinen, im gegenständlichen Fall DON, auf Getreide (Mais) parallel zum Detoxifikationsprozeß verläuft, jedoch nicht mit gleicher Geschwindigkeit. Der Dekontaminationsprozeß über Ultraschallbehandlung der Getreideprodukte (Mais) verläuft zunächst schneller. Die Reduktion des Toxingehalts (DON-Gehalts) scheint, wie zumeist gefunden, relativ zum Anfangsgehalt welcher vor der Ultraschallbehandlung gegeben war, zu sein, wobei man nach 70min bereits eine Detoxifikation des Getreidekorns (Mais) von ca. 90% erreicht. Nach 10min Ultraschallbehandlung erzielt man bei dieser Versuchsanordnung bereits eine Reduzierung des Toxingehalts (DON) von 50%.

Bei einer Verbesserung des Ultraschallbehandlungsprozesses bzw. dessen technologische Optimierung (hohe Mikrocavitationsdichte in der Nähe des Getreidekorns und weitgehende Vermeidung der frühzeitigen Dämpfung der Ultraschallwellen) kann der Detoxifikationsgrad über Ultraschallbehandlung sicher noch optimiert werden. Auch wird trockenes Getreide eventuell eine andere (langsamere) Detoxifikationskinetik aufweisen als z.B. erntefeuchtes Getreide. Die relative Abnahme des Gehalts an Deoxynivalenol (DON), welches quasi als Leitsubstanz für eine Kontamination von Getreide (Mais) mit Trichothecen Mykotoxinen anzusehen ist, scheint ein gutes Maß für den Grad der Gesamtdetoxifikation von Trichothecen Mykotoxinen über die Ultraschallbadbehandlung zu sein.

Die gewaschenen und getrockneten Maiskörner waren einwandfrei hinsichtlich Aussehen, Geschmack und Qualität.

### Beispiel 4

Detoxifikation von Weizenkörnern, welche mit Deoxynivalenol (DON) und 3-Acetyldeoxynivalenol (3-AcDON) kontaminiert waren.

300g ganze Weizenkörner, welche eine mittlere Belastung von 200ppb DON und 110ppb 3-AcDON aufwiesen, wurden in 400ml Wasser, dem 10g Ca(OH)₂ und 1ml Methylamin zugegeben waren, aufgeschlämmt und 70min zeitgepulst (10-minutig) in einem Bad ultraschallbehandelt. Die mittlere Ultraschallbadtemp. betrug ca. 30°C. Der Gehalt an DON und 3-AcDON in den abgetrennten und gewaschenen Weizenkörneren fiel um ca. 95% von den Ausgangswerten.

### Beispiel 5

Detoxifikation von Hafer, welcher mit Deoxynivalenol (DON) kontaminiert war.

150g trockene ganze Haferkörner mit einer Grundbelastung an DON von 60ppb wurden in 200ml Leitungswasser, dem 30ml Ethanol und 0,3ml konz. wäßrige Ammoniaklösung beigegeben wurden, aufgeschlämmt und zeitlich ungepulst für eine Dauer von 70min ultrabeschallt. Die mittlere Ultraschallbadtemp. betrug ca. 35°C. Der DON Gehalt in den mit Wasser gewaschenen Haferhörnern sank um über 90% ab.

### Beispiel 6

Detoxifikation von Maisschrot, welcher eine durchschnittliche Deoxynivalenol (DON) Belastung von 550ppb aufwies, unter Zusatz von Essigsäure.

200mg trockener Maisschrot kam in 500ml Leitungswasser, dem 20ml Ethanol und 2ml Essigsäure zugegeben wurden, zur Aufschlämmung. Nach zeitgepulster Ultraschallbehandlung über eine Dauer von 50min und Abtrennung des: Maisschrotes und Nachwaschen des Schrotes mit Wasser gefolgt von Trocknung bei 50°C, erhielt man eine Getreideprodukt; das sich hinsichtlich Aussehen, Geschmack und Güte vom unbehandelten kaum unterschied. Der DON Gehalt sank jedoch auf unter 10% durch die Detoxifikationsbehandlung mit Ultraschall.

### Beispiel 7

Detoxifikation von Mais welcher mit Deoxynivalenol (DON), Zeralenon und Ochratoxin kontaminiert war.

150g getrocknete ganze Maiskörner, welche von einem spät geernteten und hagelgeschädigten Anbaufeld stammten und eine Grundbelastung an DON von 800ppb und Zeralenon (siehe untenstehende Strukturformel) von 400ppb aufwiesen, wurden in 300ml Leitungswasser, welches 5% Ethanol enthielt, aufgeschlämmt und mit 100ppb Orchratoxin A (siehe untenstehende Strukturformel) dotiert. Die Suspension wurde 210min unter leichtem Rühren ultraschallbehandelt, wobei der Ultraschall-Generator zeitgepulst 15min aktiv - 15min inektiv - 15min aktiv usw. eingeschaltet wurde. Die Behandlungslösung erwärmte sich im Laufe der Behandlungsdauer auf 40°C. Zum Behandlungsende wurde das Gut von der Lösung separiert und einmal mit Wasser gewaschen. Sowohl die Behandlungslösung als auch das Behandlungsgut wurden auf den Gehalt an Mykotoxinen untersucht.

| Ergebnis: | DON ppb | Zeralenon ppb | Orchratoxin ppb |
|---|---|---|---|
| Mais | 120 | 30 | <5 |
| Behandlungs= lösung | 70 | 45 | 8 |

Der Gehalt an Mykotoxinen sank sowohl in den Maiskörnern als auch in der Behandlungslösung in allen Werten zwischen 85% und 95% ab.

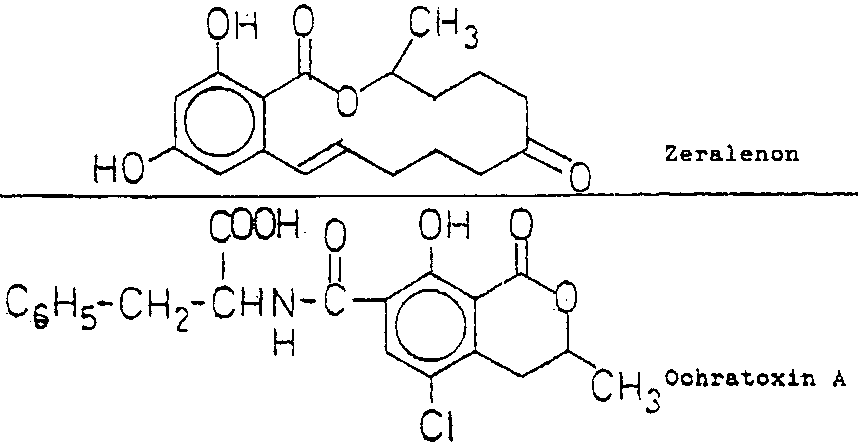

### Beispiel 8

Detoxifikation von Erdnußschrot, welcher mit Aflatoxin B₁ dotiert wurde.

100g geschrotete Erdnußkerne wurden in 300ml Leitungswasser, welches 5% Ethanol enthielt und zu dem 10ml 30%ige wäßrige Ammoniaklösung zugegeben wurden, aufgeschlämmt. Diese Aufschlämmung von Behandlungsgut in der Behandlungslösung wurde mit 600ppb Aflatoxin B₁ dotiert und ansohließend der Ultraschallbehandlung unterzogen. Im 15min-Takt gepulster Betrieb der Ultrasohallgeneratoren und unter leichtem Rühren wurde 210min behandelt. Nach Trennung des behandelten Gutes von der Behandlungslösung und Nachwaschen des Gutes mit Wasser wurde dieses bei 60°C getrocknet. Die Analyse des Gutes und der Behandlungelösung erbrachte folgendes Ergebnis:

| | Aflatoxin B₁ |
|---|---|
| Erdnußschrot | 1ppb |
| Behandlungslösung | 17ppb |

Der Toxingehalt nahm demnach um über. 90% ab.

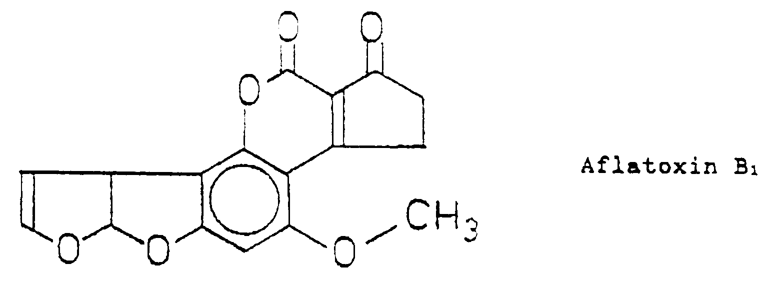

### Beispiel 9

Zelltoxikologische Uberprüfung der Detoxifikation von DON in wäßrigen Lösungen.

Eine wäßrige Stammlösung von DON (1000ppb) wurde in 7 Teile aliquot geteilt, wobei 5 Aliquote mit entweder Ammoniak, Natriumbicarbonat, Natriumcarbonat, Hydrogenwasserstoffsäure und Propionsäure versetzt wurden. Die pH Werte der Lösungen lagen zwischen pH3 und pH10. Diese Lösungen sowie eine wäßrige Kontrollprobe wurden einer zeitlich ungepulsten Ultraschallbehandlung für eine Dauer von 20min ausgesetzt. Nach Abschluß der Behandlung wurden die Lösungen auf annähernd pH7 gepuffert und einem Zelltoxtest zugeführt. Die Auswertung erbrachte, daß eine Detoxifikation des DON über die Ultraschallbehandlung unter Chemikalienzufuhr (sauer oder basisch) eintrat; eine Ultraschallbehandlung ohne Chemikalienzusatz führt zu keiner Detoxifikation.
Eine quantitative Bewertung derartiger Tests ist schwierig.

### Beispiel 10

Zelltoxikologische Uberprüfung der Detoxifikation von DON in Maisextrakten, wie sie bei der Ultraschallbehandlung anfallen.

Von 500g fein gemahlenen Maiskörnern, die eine durchschnittliche DON-Belastung von 800ppb aufwiesen, wurde ein wäßrigalkoholischer "Extrakt" hergestellt, wobei jede Ultraschallbehandlung vermieden wurde. Ausrührzeit 50min; vorsichtige Einengung des Extraktes auf die Hälfte, um den gesamten Alkohol zu entfernen.

Parallel hierzu wurde vom selben Mais eine Detoxifikation gemäß Beispiel 1 durchgeführt. Gemäß DON-Analyse des getrockneten Endmaterials betrug der Detoxifikationsgrad 90%.

Von dem gemahlenen detoxifizierten Mais wurde nun wie oben ein Extrakt hergestellt und in zwei Teile geteilt. Ein Teil verblieb bei einem DON-Gehalt von 80ppb, wohingegen der zweite Teil mit einer wäßrigen DON-Stammlösung wiederum auf 800ppb aufdotiert wurde.

Mit all diesen Extrakten wurde ein Zelltoxtest durchgeführt. Es zeigte sich eindeutig, daß die Abnahme des DON-Gehaltes um 90% auch dessen Detoxifikation bedeutet. Die Vermutung, daß bei der Ultraschallbehandlung von Getreidekörneren unter den gegebenen Bedingungen chemische Reaktionen, die den taxophoren 12,13-Epoxidring angreifen, eventuell ausgelöst werden, sollte hiermit eine Bestätigung finden.

Bereits die Beispiele 9 und 10 zeigen, daß die Erfindung nicht nur für die Dekontamination und Detoxifikation von Getreiden angewendet werden kann, sondern auch zur Behandlung von kontaminiertem Abwasser (Beispiel 9) oder von Nährstoffdispensionen in Form von Maisextrakten (Beispiel 10).

Weiterhin gibt es Anzeichen dafür, daß das hier vorgeschlagene Detoxifikationsverfahren mittels Ultraschallbehandlung eine allgemeine Behandlungsmethode für Mykotoxine mit reaktiven bzw. labilen funktionellen Gruppen darstellt mit weitreichenden Anwendungsmöglichkeiten.

Außerdem scheint es nach dem derzeitigen Stand der Untersuchungen, daß das Verfahren ohne weiteres im industriellen Maßstab durchgeführt werden kann. Hierfür scheinen zwei Möglichkeiten erfolgversprechend zu sein. Einerseits kann man das zu behandelnde Gut mit der erwünschten Flüssigkeit in einen großen Behälter geben und die Ultraschallenergie in diesen Behälter einstrahlen, um dort eine Mikrokavitation zu verursachen. Hierbei ist es wünschenswert, die Flüssigkeit mit Getreide umzurühren, damit das Getreide in der Flüssigkeit in schwebender Form vorliegt, so daß die Ultraschallgeneratoren nicht durch Getreidemassen gedämpft werden, und auch sicherzustellen, daß die erwünschte Mikrokavitation in erwünschtem Maße eintritt, beispielsweise durch das gesamte oder durch ein wesentliches Teil des behandelten Volumens.

Zweitens besteht die Möglichkeit, die Flüssigkeit mit dem darin enthaltenen Gut durch einen Behandlungskanal strömen zu lassen und in diesem mittels Ultraschallenergie zu behandeln. Diese Behandlung kann von einem einzigen Ultraschallgenerator ausgehen oder es können mehrere Ultraschallgeneratoren bzw. Ultraschallspitzen entlang und/oder guer zum Kanal angeordnet werden. Um eine ausreichende Behandlungsdauer im Kanal zu erreichen, ohne daß der Kanal zu lang wird, ist es günstig, die Flüssigkeit mit dem darin enthaltenen Gut mehrfach durch den Kanal strömen zu lassen. Auch hier soll die Ultraschallfrequenz, die eingestrahlte Energiemenge und die genaue Auslegung des Kanals so erfolgen, daß die erwünschte Mikrokavitation eintritt.

Die Kanallänge und die Zahl und Dichte der daran angeordneten Ultraschallgeneratoren bestimmen somit über die Durchflußzeit auch die Behandlungsdauer des Gutes, wobei der Gesamtkanal durch übereinander oder hintereinander angeordnete Kanalsegmente zu beschreiben ist; dies kann durch mehrmaliges Durchlaufen des Gutes durch einen Kanal ebenfalls erreicht werden.

Zur Ultraschallfrequenz ist im allgemeinen zu sagen, daß dies unkritisch ist, sie muß nur im Ultraschallbereich liegen. Dieser erstreckt sich von ca. 10 Hz bis 10 MHz, wobei der Bereich bis zu 100 kHz als Leistungsultraschallbereich gilt und der weitere Bereich bis zu 10 MHz vor allem 1 - 10 MHz als Hochfrequenz-Ultraschallbereich bezeichnet wird.

Die eingestrahlte Energiemenge scheint auch unkritisch zu sein, wesentlich ist nur, daß die erwünschte Mikrokavitation eintritt. Ggf. sind die Ultraschallfrequenz und die verwendete eingestrahlte Energiemenge an die konkrete Auslegung des Behandlungsbehälters bzw. Kanals und sonstigen Gegebenheiten anzupassen. Dies kann experimentell erfolgen. Im allgemeinen gilt, je niedriger die Frequenz, desto weniger Leistung ist erforderlich, um die Kavitationswirkung bei niedrigen Frequenzen zu erzeugen, so daß aus diesem Grunde niedrigere Frequenzen zu bevorzugen sind. Die aufgenommene Leistung der Ultraschallgeneratoren hat einen Einfluß auf das Volumen der Flüssigkeit, in dem die Kavitation erzeugt werden kann.

Die Durchführung des erfindungsgemäßen Verfahrens erfolgt mit der Vorrichtung wie in den Ansprüchen 9 und 10 definiert.

Im folgenden wird eine Vorrichtung zur Durchführung des erfindungsgemäßen Verfahrens beschrieben. Dabei sind in den verschiedenen Figuren der Zeichnung einander entsprechende Bauteile mit gleichen Bezugszeichen versehen.

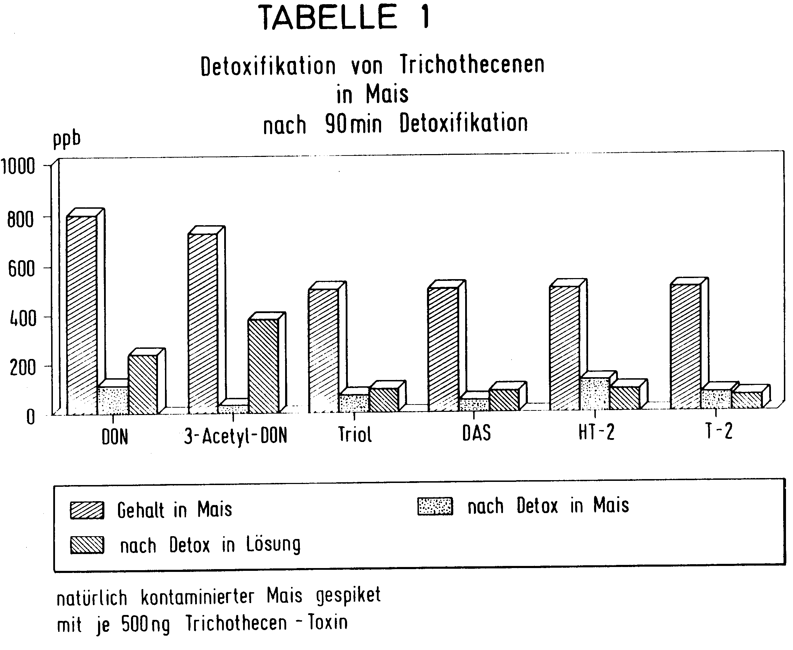

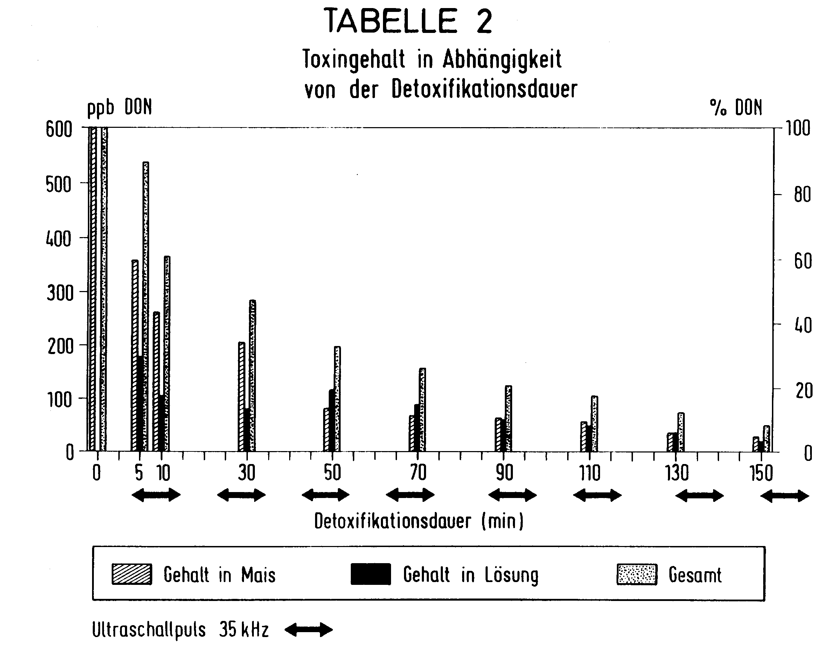

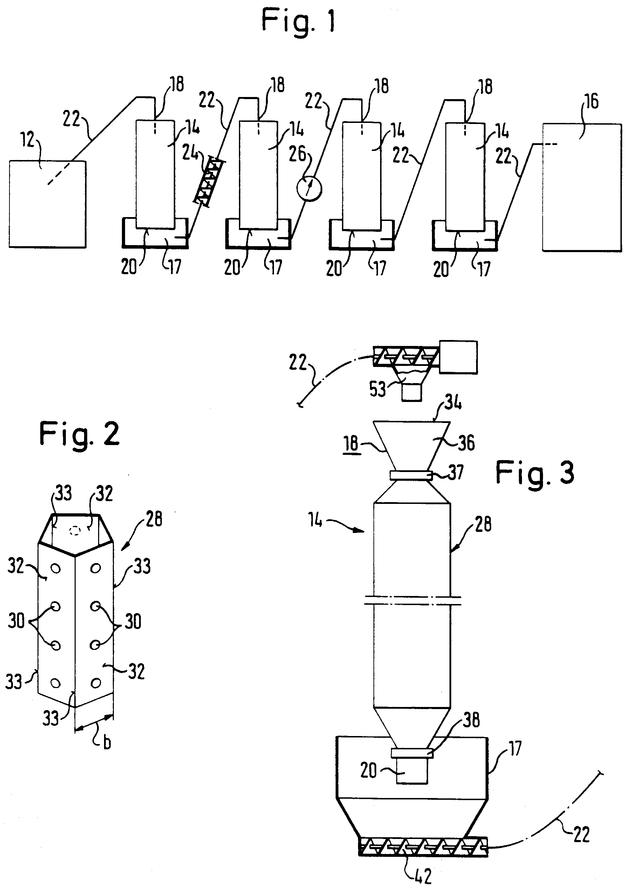

Fig. 1 zeigt eine Anlage zur Dekontamination und Detoxifikation von zu behandelndem Gut, insbesondere von Getreide, mit einer Vorbehandlungsstation, z.B. einem Vorquellbehälter 12, mit einer Reihe von nacheinander angeordneten Behandlungsstationen 14 und mit einer Nachbehandlungsstation, z.B. mit einem Trockenturm 16. Unterhalb der Behandlungsstationen 14 ist jeweils ein Auffangbehälter 17 angeordnet. Zwischen dem Vorquellbehälter 12 und der ersten Behandlungsstation 14, zwischen den einzelnen Behandlungsstationen 14 sowie zwischen der letzten Behandlungsstation 14 und dem Trockenturm 16 sind Förderleitungen 22 vorgesehen, die jeweils einen Einlaß 18 einer Behandlungsstation 14 mit einem Auslaß 20 der vorhergehenden Behandlungsstation bzw. mit dem Vorquellbehälter 12 verbinden. Die dem Auslaß 20 der letzten Behandlungsstation 14 zugeordnete Förderleitung 22 führt zum Trockenturm 16.

Um das zu behandelnde Gut durch die Förderleitungen 22 zu transportieren, können diesen eine Schnecke 24 oder eine Pumpe 26 zugeordnet sein, wie in Fig. 1 angedeutet.

Jede Behandlungsstation weist, wie in Fig. 3 beispielsweise dargestellt, einen senkrecht angeordneten Kanal 28 auf, dessen Querschnitt ein Vieleck bildet. Bevorzugt ist der Querschnitt des Behandlungskanals 28 ein gleichseitiges Fünfeck, wie in Fig. 2 dargestellt.

An den Seitenflachen 32, deren Breite vorzugsweise zwischen 7 cm und 20 cm, insbesondere 10 cm bis 15 cm beträgt, sind Ultraschallgeneratoren 30 so über deren Länge verteilt flächendeckend angebracht, daß die von ihnen ausgesandten Ultraschallwellen auf die jeweils gegenüberliegende Kante 33 des Behandlungskanals 28 zulaufen.

Der Querschnitt des Behandlungskanals 28 kann aber auch ein Vier- oder Sechseck sein. Die Ultraschallgeneratoren 30 sind dann jedoch schraubenlinienförmig anzuordnen, so daß sie nicht einander unmittelbar gegenüberliegen. Hierdurch werden Interferenzen der Ulraschallwellen weitgehend vermieden. Ist der Abstand der Ultraschallgeneratoren groß genug, z.B. mehr als 20 cm bis 25 cm so treten praktisch ebenfalls keine Interferenzen mehr auf.

Entsprechend Fig. 3 weist eine Behandlungsstation 14 am Einlaß 18 einen Einlaßbehälter 36 min einer Einlaßöffnung 34 auf. Der Einlaßbehälter 36 ist über einen Durchflußregler 37 mit dem oberen Ende des Behandlungskanals 28 verbunden. Am unteren Ende des Behandlungskanals 28 ist ggf. über einen entsprechenden Durchflußregler 38, der Auslaß 20 angebracht. Unterhalb davon ist der Auffangbehälter 17 vorgesehen, an dessen Unterseite ein Einlaßsabschnitt 42 der nur gestrichelt angedeuteten Förderleitung 22 angebracht ist, um ein behandeltes oder weiterzubehandelndes Gut, z.B. Getreide, zur nachfolgenden Behandlungsstation 18 oder zum Trockenturm 16 zu transportieren.

Zum Zuführen von zu behandelndem Gut bzw. Getreide oder dgl. ist oberhalb der Einlaßöffnung 34 ein Auslaßabschnitt 53 einer Förderleitung 22 angeordnet.

Die Arbeitsweise der in Fig. 1 dargestellten Anlage wird anhand der Behandlung von Getreide erläutert.

Im Vorquellbehälter 12 wird das Getreide in einer Behandlungsflüssigkeit, z.B. Wasser mit Ethanol vorgequollen. Die Quellzeit beträgt dabei zwischen 20 und 200 min. Anschließend wird das Getreide über die Förderleitung 22 zur ersten Behandlungsstation 14 transportiert und durch den Einlaß 18 eingefüllt.

Der Durchfluß der Getreidekörner durch den mit einer Behandlungsflüssigkeit gefüllten Behandlungskanal 28, also die Menge der den Behandlungskanal 28 durchlaufenden Getreidekörner pro Flüssigkeitsmenge im Behandlungskanal 28 wird mittels der Durchflußregler 37, 38 so gesteuert, daß die Getreidekörner von allen Seiten für die Ultraschallwellen bzw. für die Mikrokavitation zugänglich sind.

Nach dem Durchlaufen des Behandlungskanals 28 gelangen die Getreidekörner durch den Auslaß 20 in den Auffangbehälter 17, aus dem sie mittels der eine Schnecke aufweisenden Förderleitung 22 zur nachfolgenden Behandlungsstation 14 transportiert werden, wo der Durchlauf der Körner durch den Behandlungskanal 28 in im wesentlichen gleicher Weise erfolgt. Aus der letzten Behandlungsstation 14 werden die Körner dann in einem Trockenturm 16 gefördert.

Das Hintereinanderschalten von mehreren Behandlungskanälen 28 wie sie bei der Anlage nach Fig. 1 erfolgt, ermöglicht es, in den einzelnen Behandlungskanälen 28 verschiedene Behandlungsflüssigkeiten vorzusehen. Dabei kann auch reines Wasser als Behandlungsflüssigkeit gewählt werden, was insbesondere für die letzte Behandlungsstation 14 vor dem Trockenturm 16 zweckmäßig ist. Um auch bei einem kontinuierlichen Betrieb der Anlage eine einwandfreie Dekontamination und Detoxifikation zu erreichen, kann in jeder Behandlungsstation 14 die entsprechende Behandlungsflüssigkeit kontinuierlich erneuert werden. Dies erfolgt beispielsweise dadurch, daß frische Behandlungsflüssigkeit von unten nachgefüllt wird. Am Einlaß 18 kann dann die Behandlungsflüssigkeit über einen geeigneten Überlauf abgezogen werden.

Die Zahl der Durchgänge der Getreidekörner durch mehrere Behandlungskanäle 28, deren Länge vorzugsweise 1 m bis 2 m, insbesondere 1,5 m beträgt, aber auch länger oder kürzer sein kann, liegt zwischen 2 und 20, vorzugsweise zwischen 2 und 8. Damit ergibt sich, daß die effektive Behandlungszeit im Behandlungskanal 28 pro Getreidekorn z.B. zwischen 10 und 100 s liegen kann. Die behandelten Getreidekörner sind also nur einer relativ kurzen Behandlungsbelastung ausgesetzt.

Nach dem Abtrennen der Getreidekörner von der jeweiligen Behandlungslösung kann diese gegebenenfalls mit Ultraschall weiterbehandelt werden, um eine möglichst vollständige Detoxifikation von in der Behandlungslösung enthaltenen Restmykotoxinmengen zu erreichen.

Für die Ultraschallbehandlung können entweder alle oder einzelne ausgewählte Ultraschallgeneratoren 30 so aktiviert werden, daß sie Ultraschallwellen mit gleicher oder verschiedener Amplitude bzw. Energie gepulst oder ungepulst abstrahlen.

Es wurden Versuche mit einer einzelnen Behandlungsstation 14 durchgeführt, dabei wurden Chargen von z.B. 60 kg Mais in 300 l Behandlungsflüssigkeit von 1 % Ethanol in Wasser durchgeführt. Nach fünf Durchgängen wurde eine Detoxifikation bzw. Dekontamination des Maises von 82 % erreicht. Vor der eigentlichen Detoxifikations-Dekontaminationsbehandlung wurde der Mais in reinem Wasser für zwei Stunden vorgequollen.

Bei einem weiteren Versuch, bei dem als Behandlungsflüssigkeit Wasser verwendet und der Mais mit 1% Ethanol in Wasser für 2 Stunden vorgequollen wurde, erreichte man eine Detoxifikation bzw. Dekontamination von etwa 80 % erreicht.

Das Quellen des Mais dient in erster Linie der Anfeuchtung und Benetzung des Kornmaterials. Erntefrisches Getreide braucht also demnach nicht vorgequollen zu werden.

Bei der Verwendung von "reinem Leitungswasser" als Behandlungsflüssigkeit ist zu berücksichtigen, daß sich durch das Aufschlämmen des Getreides im Wasser zu einem gewissen, jedoch kleinen Teil Getreideinhaltsstoffe, wie z.B. Stärke, Zucker usw., im Wasser lösen. Diese sehr kleine Menge an gelösten Getreideinhaltsstoffen reagieren dann unter Einwirkung von Ultraschall und Mikrocavitation mit den Mykotoxinen und bewirken so den Behandlungseffekt. Auch die kleinen im Wasser aufgeschlämmten Schwebepartikel, z.B. Stärkepartikel, können an der Gesamtreaktion teilhaben. Das durch die Schwebeteilchen trübe Wasser wird abschließend von den Getreidekörnern getrennt, die daraufhin nochmals mit Wasser nachgewaschen werden, so daß das Getreide abschließend sehr sauber ist.

Da Getreide durch den Erntevorgang immer staubig ist, wird der Staub ebenfalls in der Behandlungsflüssigkeit, also im Wasser oder Wasser + Zusatzmittel, mit aufgeschlämmt und stellt somit ein in sito hergestelltes wässriges Behandlungsmedium dar. In der Aufschlämmung von Getreidekörnern in der Behandlungsflüssigkeit, die mit Ultraschall beaufschlagt wird, findet also nicht nur eine Oberflächenreinigung statt, sondern es wird parallel dazu eine in sito Behandlung bzw. chemische Reaktion in wässrigem Milieu erreicht, wodurch der Dekontaminations- und Detoxifikationseffekt erzielt wird.

## Patentansprüche

1. Verfahren zur Dekontamination bzw. Detoxifikation von mit Mykotoxinen belastetem Getreide oder anderen mit Mykotoxinen belasteten als Nahrungs- und oder Futtermittel dienenden Samen sowie von mit Mykotoxinen belasteten chemischen Substanzen bzw. Nährstoffen und/oder Getreide oder andere Samen enthaltenden Flüssigkeiten, bei dem diese mit Ultraschallenergie behandelt werden, wobei die Dekontamination und Detoxifikation durch Mikrokavitation bzw. durch "sono-chemisch" induzierte Reaktionen in wäßrigem Milieu erreicht wird.

2. Verfahren zur Dekontamination und Detoxifikation von Getreide oder anderen als Nahrungs- und/oder Futtermittel dienenden Samen, welches bzw. welche mit Mykotoxinen, insbesondere mit Fusarien-Mykotoxinen der Trichothecen Reihe der allgemeinen Formel I, 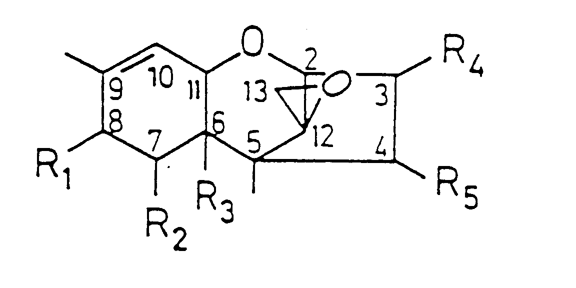 wobei durch Substitutionsvarianten der Rest R1 bis R5 die verschiedenen Trichothecen-Mykotoxine, wie z.B. T-2 Toxin (T-2), HT-2 Toxin (HT-2), Diacetoxyscirpenol (DAS), Monoacetoxyscirpenol, Neosolanin, Nivalenol (NIV), Deoxynivalenol (DON), 3-Acetyldeoxynivalenol (3-AcDON), T-2 Tetraol, Scripentriol, Fusarenon, Crotoocin, Satratoxin H etc., zu beschreiben sind, belastet ist bzw. sind, dadurch gekennzeichnet, daß die Samen oder das Getreide einer Ultraschall-Behandlung in wässrigem Milieu durch Aufschlämmen der Samen- oder Getreidekörner in einer wässrigen Behandlungsflüssigkeit unterzogen werden.

3. Verfahren nach Anspruch 2, dadurch gekennzeichnet, daß die Samen Reis, Buchweizen, Hülsenfrüchte, Nüsse oder dgl. und das Getreide Mais, Weizen, Gerste, Hafer, Roggen und dgl., oder Schrote und Grieße davon, darstellen.

4. Verfahren nach Anspruch 2 oder 3, dadurch gekennzeichnet, daß das wässrige Milieu reines Leitungswasser oder ein Gemisch aus Leitungswasser mit Chemikalien, welche eine Hydroxylgruppe haben, darstellt, wobei die Chemikalien bspw. Methanol, Ethanol, Propanol, Glycerin oder Polyethylenglycol, bevorzugt Methanol oder Ethanol zwischen 1% und 10%, darstellen, und/oder daß in das wässrige Milieu Alkalien und/oder Verbindungen mit einer Amin-Funktion eingetragen werden, wobei vorzugsweise die Alkalien Kalziumhydroxyd, Natriumhydroxyd, Natriumbicarbanat, Natriumcarbanat und die Amine Ammoniak oder Methylamin darstellen, und/oder daß dem wässrigen Milieu Säuren zugegeben werden, wobei vorzugsweise die Säuren Mineralsäuren wie HC1, Schwefelsäure oder Phosphorsäure, oder organische Säuren, wie Essigsäure oder Propionsäure, darstellen.

5. Verfahren nach Anspruch 2 bis 4, dadurch gekennzeichnet, daß die Ultraschallbehandlung des aufgeschlämmten Getreides ungepulst oder zeitlich gepulst über eine Zeitdauer von 10 sec bis 200 min verläuft, wobei die Temperatur der ultrabeschallten Behandlungslösung vorzugsweise zwischen 12° und 50° liegt.

6. Verfahren nach Anspruch 2 bis 5, dadurch gekennzeichnet, daß das detoxifizierte Getreide von der Ultraschall-Lösung abgetrennt und nochmals mit Wasser, mit oder ohne Ultraschallbehandlung, nachgewäschen wird.

7. Verfahren nach einem der Ansprüche 1 bis 6, dadurch gekennzeichnet, daß die Samen bzw. das Getreide in einer Behandlungsflüssigkeit, bevorzugt Mischungen aus Wasser und Ethanol zwischen 99:1 und 80:20, vorgequollen werden, wobei die Vorquellzeit vorzugsweise 20 min bis 200 min beträgt, und/oder daß das Verfahren in einem industriellen Maßstab durchgeführt wird.

8. Verfahren nach Anspruch 7, dadurch gekennzeichnet, daß das Verfahren in einem großen Behälter durchgeführt wird mit mehreren Ultraschallenergie in den Behälter abstrahlenden Ultraschallschwinger bzw. -Schwingern, wobei die Ultraschallfrequenz, die eingestrahlte Energiemenge oder die Energiedichte und die Auslegung des Behälters so gewählt sind, daß Mikrokavitation in der im Behälter vorhandenen Flüssigkeit erreicht wird, wobei die Flüssigkeit und in dieser enthaltenes zu behandelndes Gut, d.h die Samen bzw das Getreide vorzugsweise in Bewegung gehalten werden, und/oder die Behandlungsflüssigkeit zusammen mit dem darin zu behandelnden Gut, das ggf. vorgequollen ist, entlang einem Behandlungskanal an mehreren Ultraschallgeneratoren vorbeifließt und ggf. diesen Behandlungskanal oder mehrere hintereinander angeordnete Behandlungskanäle einmal oder mehrmals durchfließt, wobei die Ultraschallfrequenz, die abgestrahlte Energiemenge bzw. die Energiedichte und/oder die Ausführung des Kanals so gewählt sind, daß Mikrokavitation in der Flüssigkeit erreicht wird.

9. Vorrichtung zur Durchführung des Verfahrens nach einem oder mehreren der vorhergehenden Patentansprüche mit zumindest einem Behandlungsbehälter (28) zur Aufnahme des zu behandelnden Gutes bzw. Samen oder Getreide und der Behandlungsflüssigkeit und mit am Behandlungsbehälter (28) angeordneten Ultraschallgeneratoren (30), dadurch gekennzeichnet, daß der Behandlungsbehälter als Behandlungskanal (28) ausgebildet ist, durch den die Samen oder das Getreide hindurchströmen können, und daß die Ultraschallgeneratoren (30) über die Länge des Behandlungskanals (28) verteilt an den Seitenflächen (32) des Behandlungskanals (28) angeordnet sind, daß der Querschnitt des Behandlungskanals (28) ein gleichseitiges Vieleck ist, wobei die gleichlangen Seiten des Vielecks eine Länge von 4 cm bis 50 cm, insbesondere von 7 cm bis 20 cm aufweisen und/oder der Behandlungskanal (28) eine Länge von 0,4 m bis 12 m, vorzugsweise von 1 m bis 5 m, insbesondere 1,5 m aufweist.

10. Vorrichtung nach Anspruch 9, dadurch gekennzeichnet, daß mehrere Behandlungskanäle (28) funktionell hintereinander angeordnet sind und daß ein Auslaß (20) am Ende jedes Behandlungskanals (28) mit einem Einlaß (18) des darauffolgenden Behandlungskanals (28) bzw. mit einer Auffangvorrichtung (17) oder einer weiteren Behandlungseinrichtung (16) für das zu behandelnde Gut oder das Getreide bzw. die Samen über eine Förderleitung (22) verbunden ist und vorzugsweise, daß der Förderleitung (22) eine Förderschnecke (24) oder Förderpumpe (26) zugeordnet ist, und/oder daß nach dem in Transportrichtung des zu behandelnden Gutes oder des Getreides bzw. der Samen letzten Behandlungskanal (28) eine Trocknungseinrichtung für das Gut, vorzugsweise ein Trockenturm (16) als weitere Behandlungseinrichtung vorgesehen ist, und/oder daß vor dem in Transportrichtung ersten Behandlungskanal (28) ein Vorquellbehälter (12) als Vorbehandlungsstation angeordnet ist.

## Claims

1. Method for the decontamination and/or detoxification of cereals contaminated with mycotoxins, or of other seeds contaminated with mycotoxins and serving as a foodstuff and/or animal feed, and also of liquids containing chemical substances and/or nutrients and/or cereals or other seeds contaminated with mycotoxins, wherein these are treated with ultrasonic energy, with the decontamination and detoxification being achieved by microcavitation and "sono-chemically" induced reactions in the aqueous medium.

2. Method of decontamination and detoxification of cereals or other seeds serving as a foodstuff and/or animal feed, which is or are contaminated with mycotoxins, in particular the fusarium mycotoxins of the trichothecene series of the general formula I 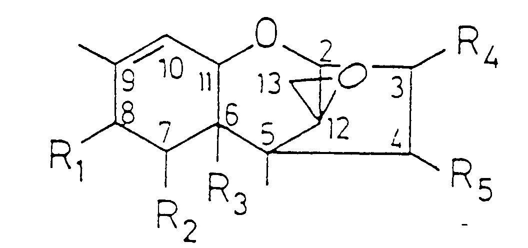 with the radicals R1 to R5 being substitution variants for the trichothecene mycotoxins, such as for example T-2 toxin (T-2), HT-2 toxin (HAT-2), diacetoxyscirpenol (DAS), monoacetoxyscirpenol, 3-acetyldeoxynivalenol (3-AcDON), T-2 tetraol, scirpentrio, fusarenon, crotocin, satratoxin H etc, characterized in that the seeds or the cereal are subjected to an ultrasonic treatment in an aqueous medium, forming a slurry of the seeds or cereal grains in an aqueous treatment liquid.

3. Method in accordance with claim 2, characterized in that the seeds are rice, buckwheat, legumes, nuts or the like and the cereals are maize, wheat, barley, oats, rye and the like or meal and farina thereof.

4. Method in accordance with claim 2 or claim 3, characterized in that the aqueous medium is pure tap water or a mixture of tap water with chemicals which have a hydroxy group, wherein the chemicals are, for example, methanol, ethanol, propenol, glycerine or polyethylene glycol, preferably methanol or ethanol between 1 % and 10 %, and/or in that alkalis and/or compounds with an amine function are added into the aqueous medium, with the alkalis preferably being calcium hydroxide, sodium hydroxide, sodium bicarbonate, sodium carbonate and the amines being ammonia or methylamine, and/or in that acids are added to the aqueous medium, with the acids preferably being mineral acids such as HCL, sulphuric acid or phosphoric acid or organic acids, such as acetic acid or propionic acid.

5. Method in accordance with claims 2 to 4, characterized in that the ultrasonic treatment of the slurried cereal takes place in a non-pulsed or time-pulsed manner over a time duration of ten seconds to 200 minutes, with the temperature of the ultrasonic treatment solution preferably lying between 12° and 50°.

6. Method in accordance with claims 2 to 5, characterized in that the detoxified cereals are separated from the ultrasonic solution and are subsequently washed with water, with or without ultrasonic treatment.

7. Method in accordance with one of the claims 1 to 6, characterized in that the seeds or the cereal are preswelled in a treatment liquid, preferably mixtures of water and ethanol between 99 : 1 and 80 : 20, with the preswelling time preferably amounting to 20 minutes to 200 minutes and/or in that the method is carried out on an industrial scale.

8. Method in accordance with claim 7, characterized in that the method is carried out in a large container, with a plurality of ultrasonic oscillators which radiate ultrasonic energy into the container, with the ultrasonic frequency, the quantity of energy radiated in or the energy density and the design of the container being so selected that microcavitation is achieved in the liquid contained in the container, wherein the liquid and the material to be treated contained in it, i.e. the seeds or the cereal, are preferably kept in motion and/or the treatment liquid together with the material to be treated therein, which is optionally preswelled, flow along a treatment channel past a plurality of ultrasonic generators and optionally flow through this treatment channel or a plurality of treatment channels arranged in series once or a plurality of times, with the ultrasonic frequency, the radiated quantity of energy or the energy density and/or the implementation of the channel being selected so that microcavitation is achieved in the liquid.

9. Apparatus for carrying out the method in accordance with one or more of the preceding patent claims, comprising at least one treatment container (28) for receiving the material or seeds or cereals to be treated and the treatment liquid and comprising ultrasonic generators (30) arranged at the treatment container (28), characterized in that the treatment container is formed as a treatment channel (28), through which the seeds or the cereal can flow; and in that the ultrasonic generators (30) are arranged distributed over the length of the treatment channel (28) at the side surfaces (32) of the treatment channel (28); in that the cross-section of the treatment channel is an equilateral polygon, with the equal length sides of the polygon having a length of 4 cm to 50 cm, in particular of 7 cm to 20 cm and/or the treatment channel (28) having a length from 0.4 m to 12 m, preferably from 1 m to 5 m, in particular of 1.5 m.

10. Apparatus in accordance with claim 9, characterized in that a plurality of treatment channels (28) are arranged functionally in series, and in that an outlet (20) at the end of each treatment channel (28) is connected, via a conveyor line (22), to an inlet (18) of the subsequent treatment channel (28) or to a collection device (17) or to a further treatment device (16) for the material to be treated or for the cereal or the seeds, preferably in that a conveyor screw (24) or a conveyor pump (26) is associated with the conveyor line (22) and/or in that a dryer device for the material, preferably a dryer tower (16) is provided as a further treatment device after the final treatment channel (28) in the direction of transport of the material to be treated or of the cereal or of the seeds, and/or in that a preswelling container (12) is arranged as a pretreatment station in front of the first treatment channel (28) in the transport direction.

## Revendications

1. Procédé de décontamination ou détoxification de céréales chargées de mycotoxines ou d'autres graines servant d'aliment ou de fourrage chargées de mycotoxines, ainsi que de substances chimiques chargées de mycotoxines, ou bien de liquides contenant des éléments nutritifs et/ou des céréales ou d'autres graines, dans lequel ces substances sont traitées par l'énergie d'ultrasons, la décontamination et la détoxification étant obtenues par microcavitation ou bien par des réactions induites de manière "sono-chimique" en milieu aqueux.

2. Procédé de décontamination ou détoxification de céréales ou d'autres graines servant d'aliment ou de fourrage chargées de mycotoxines, notamment des mycotoxines de Fusarium de la famille des trichothécènes de la formule générale I ci-dessous, 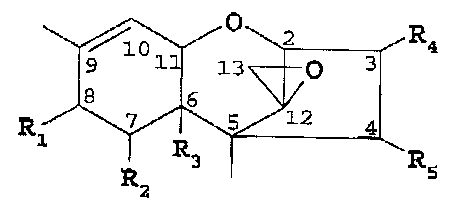 des variantes de substitution des restes R1 à R5 permettant de décrire les différentes mycotoxines trichothécènes, par exemple la toxine T-2 (T-2), la toxine HT-2 (HT-2), le diacétoxyscirpénol (DAS), le monoacétoxyscirpénol, la néosolanine, le nivalénol (NIV), le désoxynivalénol (DON), le 3-acétyldésoxynivalénol (3-AcDON), le tétraol T-2, le scirpènetriol, la fusarénone, la crotoocine, la satratoxine H, etc., caractérisé en ce que les graines ou les céréales sont soumises à un traitement aux ultrasons en milieu aqueux en mettant en suspension les graines ou les grains de céréales dans un liquide de traitement aqueux.

3. Procédé selon la revendication 2, caractérisé en ce que les graines représentent le riz, le sarrasin, des légumineuses, des nuculaires ou similaires, et les céréales représentent le maïs, le blé, l'orge, l'avoine, le seigle et similaires, ou bien des gruaux et semoules de ceux-ci.

4. Procédé selon la revendication 2 ou la revendication 3, caractérisé en ce que le milieu aqueux représente l'eau du robinet pure ou un mélange d'eau du robinet et de produits chimiques possédant un groupe hydroxyle, lesdits produits chimiques étant par exemple le méthanol, l'éthanol, le propanol, le glycérol ou le polyéthylène-glycol, de préférence le méthanol et l'éthanol entre 1 % et 10 %, et/ou en ce que l'on introduit dans le milieu aqueux des alcalis et/ou des composés possédant une fonction amine, lesdits alcalis représentant de préférence l'hydroxyde de calcium, l'hydroxyde de sodium, le bicarbonate de sodium, le carbonate de sodium, et lesdites amines représentant l'ammoniaque ou la méthylamine, et/ou en ce que l'on ajoute au milieu aqueux des acides, lesdits acides représentant de préférence des acides minéraux tels que l'acide chlorhydrique, l'acide sulfurique ou l'acide phosphorique, ou des acides organiques tels que l'acide acétique ou l'acide propionique.

5. Procédé selon les revendications 2 à 4, caractérisé en ce que le traitement aux ultrasons des céréales en suspension se fait de manière non pulsée ou bien pulsée de manière temporelle sur une durée de 10 secondes à 200 minutes, la température de la solution de traitement soumise aux ultrasons étant de préférence comprise entre 12 °C et 50 °C.

6. Procédé selon les revendications 2 à 5, caractérisé en ce que les céréales détoxifiées sont séparées de la solution de traitement aux ultrasons et soumises ensuite à un lavage supplémentaire à l'eau, avec ou sans traitement aux ultrasons.

7. Procédé selon l'une quelconque des revendications 1 à 6, caractérisé en ce que les graines ou les céréales sont soumises à un trempage préalable dans un liquide de traitement, de préférence des mélanges d'eau et d'éthanol dans la proportion de 99/1 à 80/20, la durée du trempage préalable étant de préférence comprise entre 20 minutes et 200 minutes, et/ou en ce que ledit procédé est mis en oeuvre à une échelle industrielle.

8. Procédé selon la revendication 7, caractérisé en ce que ledit procédé est mis en oeuvre dans un récipient de grandes dimensions avec plusieurs transducteurs d'ultrasons émettant une énergie ultrasonore dans le récipient, la fréquence des ultrasons, la quantité d'énergie rayonnée ou la densité d'énergie et la disposition du récipient étant choisies de telle sorte qu'il se produise une microcavitation dans le liquide contenu dans le récipient, le liquide et le produit à traiter contenu dans ce dernier, c'est-à-dire les graines ou les céréales, étant de préférence maintenus en mouvement, et/ou le liquide de traitement, conjointement avec le produit à traiter qu'il contient, le cas échéant prétrempé, s'écoulant dans un conduit de traitement en passant devant des générateurs d'ultrasons et passant le cas échéant une fois ou plusieurs fois dans ce conduit de traitement ou dans plusieurs conduits de traitement disposés à la suite les uns des autres, la fréquence des ultrasons, la quantité d'énergie émise ou la densité d'énergie et/ou la configuration du conduit étant choisies de telle sorte qu'il se produise une microcavitation dans le liquide.

9. Dispositif pour la mise en oeuvre du procédé selon une ou plusieurs des revendications précédentes, comportant au moins un récipient de traitement (28) destiné à recevoir le produit ou bien les graines ou céréales à traiter et le liquide de traitement, ainsi que des générateurs d'ultrasons (30) agencés sur le récipient de traitement (28), caractérisé en ce que le récipient de traitement est réalisé sous la forme d'un conduit de traitement (28) dans lequel les graines ou céréales peuvent s'écouler, et en ce que les générateurs d'ultrasons (30) sont agencés sur les surfaces latérales (32) du conduit de traitement (28) en étant répartis sur la longueur dudit conduit de traitement (28), en ce que la section du conduit de traitement (28) est un polygone équilatéral, les côtés du polygone ayant la même longueur mesurant de 4 cm à 50 cm de long, en particulier de 7 cm à 20 cm, et/ou le conduit de traitement (28) ayant une longueur de 0,4 m à 12 m, de préférence de 1 m à 5 m, et en particulier de 1,5 m.

10. Dispositif selon la revendication 9, caractérisé en ce que plusieurs conduits de traitement (28) sont agencés de manière fonctionnelle les uns à la suite des autres et en ce qu'une sortie (20) à l'extrémité de chaque conduit de traitement (28) est reliée par l'intermédiaire d'une conduite de transport (22) à une entrée (18) du conduit de traitement suivant (28) ou bien à un dispositif collecteur (17) ou à un autre dispositif de traitement (16) pour le produit à traiter ou pour les graines ou céréales, et de préférence en ce que la conduite de transport (22) est munie d'une vis transporteuse (24) ou d'une pompe d'alimentation (26), et/ou en ce ou'il est prévu comme dispositif de traitement supplémentaire, après le dernier conduit de traitement (28) dans le sens de transport du produit à traiter ou des graines ou céréales, un dispositif de séchage pour ledit produit, de préférence une tour de séchage (16), et/ou en ce qu'un récipient de prétrempage (12) est prévu en tant que poste de prétraitement dans le premier conduit de traitement (28) dans le sens de transport.
